# EUROPEAN PATENT APPLICATION

(11) **EP 4 814 776 A1**
(43) Date of publication of application: **30.09.2026**
(21) Application number: 25166569.1
(22) Date of filing: 27.03.2025
(51) Int. Cl.: G06F 30/20, G06F 111/08, G06F 113/06, G06F 119/02

(54) **DETERMINING A DESIGN LOAD FOR DESIGNING A WIND TURBINE COMPONENT**

(71) Applicant: VESTAS WIND SYSTEMS A/S, 8200 Aarhus N (DK)
(72) Inventor: Faber, Mark, 8240 Risskov (DK); Thesbjerg, Leo, 6950 Ringkøbing (DK)
(74) Representative: Vestas Patents Department

(57) **Abstract**

The invention relates to designing a wind turbine component. For a given defined load case, the invention involves, for each of a plurality of defined operational parameter values, simulating wind turbine operation at the respective operational parameter value, and determining, based on simulation output, a characteristic extreme load at the respective operational parameter value. At the defined design load, the invention involves obtaining a combined characteristic extreme load for the respective defined load case using a combining function that depends on the determined characteristic extreme load, and a defined probability of wind turbine operation, at each respective operational parameter value. This is repeated for different design loads, and the invention involves determining a design load for extreme loading based on the combined characteristic extreme loads for the respective load cases. The wind turbine component is designed in accordance with the determined design load.

## Description

### TECHNICAL FIELD

The invention relates to designing a wind turbine component, such as a wind turbine rotor blade, tower, etc., in accordance with a design load for extreme loading of the wind turbine. In particular, the invention relates to determining said design load for extreme loading based on combining different extreme loads at different values of an operational parameter, e.g. yaw offset, of the wind turbine.

### BACKGROUND

Various components of wind turbines, such as rotor blades, the tower, etc., need to withstand different types of loads over their lifetime. For instance, this can include expected ultimate/extreme loads that will be experienced over a component's lifetime, and fatigue loads caused by the cyclical or periodic nature of wind turbine operation.

Extreme loads refer to rare or extraordinary loads that a wind turbine component may experience in its lifetime. These loads may be based on a low-probability event, such as an n-year wind load event, corresponding to a load that is expected to appear once every n years, e.g. once every 50 years, as a result of incoming wind conditions/speed.

Wind turbine components need to be designed to withstand such low-probability, extreme load events for different defined design load cases in accordance with regulations and standards. Such design load cases may include extreme load effects during wind turbine operation and during standstill of the wind turbine. The design load cases may cover normal wind conditions, turbulent wind conditions, extreme gust conditions, etc. It is desired to design wind turbine components in accordance with design load requirements, while at the same time minimising/optimising material usage in the wind turbine components so as to optimise power production / wind energy capture capability of the wind turbine within the design load requirements.

Various operational parameters of a wind turbine can take different values during wind turbine operation, including control parameters - such as rotor blade pitch angle, yaw offset, etc. - and environmental parameters - such as wind speed, wind direction, etc. In known approaches, wind turbine components may be designed to withstand extreme load events for a given design load case under an assumption that values of certain respective operational parameters remain constant throughout wind turbine operation.

For instance, a wind turbine component may be designed under an assumption that a yaw offset of the wind turbine is zero throughout wind turbine operation. However, a wind turbine may be controlled to have an intentional, non-zero yaw offset at least some of the time as part of a wake steering control function. Indeed, at such different yaw offsets, different extreme loading - such as higher extreme loading - may be experienced by a wind turbine component during different loading events for the given design load case.

In further known approaches, therefore, a wind turbine component may be designed under an assumption that the wind turbine operates with a yaw offset corresponding to highest extreme loading for a given extreme load event. However, as the wind turbine does not operate with this yaw offset all of the time then this results in an overly conservative design of the component, e.g. more material/mass than is needed.

It is against this background to which the present invention is set.

### SUMMARY OF THE INVENTION

According to an aspect of the present invention there is provided a method of designing a wind turbine component. The wind turbine component may experience different loading levels during wind turbine operation at respective different values of an operational parameter of the wind turbine for a defined load case of the wind turbine. The method comprises, for each of a plurality of defined values of an operational parameter of the wind turbine: simulating operation of the wind turbine at a defined operational parameter value for the respective defined load case; and determining, based on output from the simulation, a characteristic extreme load, for the respective defined load case, experienced by the wind turbine at the respective defined operational parameter value. The method comprises obtaining a combined characteristic extreme load for the respective defined load case using a combining function that depends on the determined characteristic extreme load, and a defined probability of wind turbine operation, at each respective defined operational parameter value. The above method steps are repeated for each of a plurality of defined load cases of the wind turbine. The method comprises determining a design load for extreme loading of the wind turbine based on the plurality of combined characteristic extreme loads for the respective defined load cases. The method comprises designing the wind turbine component in accordance with the determined design load.

Determining the design load may comprise setting the design load based on a highest combined characteristic extreme load of the plurality of combined characteristic extreme loads. Optionally, the design load is set to be equal to the highest combined characteristic extreme load.

The characteristic extreme load may be a load obtained when the simulation is executed at a defined quantile of a yearly maxima distribution for average wind speeds, defined in the simulation, in the vicinity of the wind turbine. Optionally, the defined quantile value is the 98^{th} quantile.

The combining function may be a weighted average function.

The defined probabilities may be applied as weights to the respective determined characteristic extreme loads in the combining function.

The weighted average function to determine the combined characteristic extreme load *Qₐᵥ* for the respective defined load case may be expressed as: ${Q}_{av} = {\left({\sum }_{i}^{N} \left({Q}_{i}^{α}⋅{P}_{i}\right)\right)}^{\frac{1}{α}}$ where N is a total number of the defined operational parameter values of the wind turbine, *Qᵢ* is the determined characteristic extreme load at the i-th defined operational parameter value of the wind turbine, *Pᵢ* is the defined probability of wind turbine operation at the i-th defined operational parameter value among the *N* operational parameter values, and *α >* 1 is an exponent value.

The method may comprise determining the exponent value. This may comprise setting the exponent value to be a candidate exponent value. This may further comprise: (a) for each of the plurality of defined values of the operational parameter of the wind turbine, determining, based on an output of simulated operation of the wind turbine at the respective defined operational parameter value, a characteristic extreme load experienced by the wind turbine at the respective defined operational parameter value. This may further comprise: (b1) determining a candidate averaged characteristic extreme load by applying the weighted average function with the exponent value equal to the candidate exponent value; (b2) determining, using a defined design model, a characteristic resistance level of the wind turbine component based on the determined candidate averaged characteristic extreme load; and (b3) generating a resistance level probability distribution for the wind turbine component based on the determined characteristic level. This may further comprise: (c1) generating a load level probability distribution for the wind turbine component at each respective defined operational parameter value based on the determined characteristic extreme load at each respective defined operational parameter value; and (c2) aggregating the plurality of generated load level probability distributions to obtain an aggregated load level probability distribution. Steps (c1) and (c2) may alternatively be performed by generating a load level probability distribution for the wind turbine component from the aggregated characteristic extreme loads determined at each respective defined operational parameter value, i.e. 'aggregate and fit' rather than 'fit and aggregate'. This may further comprise: (d) solving a defined limit state model using the resistance level probability distribution and the aggregated load level probability distribution to obtain a failure rate of the wind turbine component. This may further comprise: (e) if the obtained failure rate is different from a desired failure rate, then repeating steps of: updating the candidate exponent value; and executing steps (b1)-(b3) and (d) with the updated candidate exponent value, until the obtained failure rate is equal to the desired failure rate, to thereby obtain the determined exponent value.

The desired failure rate may be substantially equal to a default failure rate of a default design load for extreme loading of the wind turbine associated with operation at a default value of the defined operational parameter. Optionally, the default value of the defined operational parameter occurs when a system that controls changes to the operational parameter value is inactive.

The generated resistance level probability distribution may be of a defined resistance type. The generated load level probability distribution may be of a defined distribution type. The method may comprise repeating steps (a)-(e) for a plurality of different resistance types and/or a plurality of different distribution types to obtain respective determined exponent values. A highest one of the determined exponent values may be selected to be used in the weighted average function.

In the weighted average function, for each of the plurality of defined operational parameter values, a defined probability of wind turbine operation at the respective defined operational parameter value may be applied to the respective characteristic extreme loads. The generated load level probability distribution may be of a defined distribution shape. The method may comprise repeating steps (a)-(e) for a plurality of different probabilities for each defined operational parameter value and/or a plurality of different distribution shapes to obtain respective determined exponent values. A highest one of the determined exponent values may be selected to be used in the weighted average function.

The load level probability distributions may be generated in step (c1) to have a same coefficient of variation.

The plurality of defined values of the operational parameter may be a plurality of defined values of a yaw offset of a nacelle of the wind turbine relative to incoming wind direction. Here, the yaw offset is a control parameter that can be set/defined that will result in the wind turbine intentionally trying to achieve a certain yaw error.

The plurality of defined values of the operational parameter may be a plurality of incoming wind directions relative to an orientation of a rail system, of the wind turbine, in which a tower top mass damper of the wind turbine is located.

The method may comprise manufacturing or modifying the wind turbine component designed in accordance with the determined design load.

According to another aspect of the invention there is provided a non-transitory, computer-readable storage medium storing instructions thereon that, when executed by one or more computer processors, cause the one or more computer processors to perform the method defined above.

According to another aspect of the invention there is provided a wind turbine component designed or modified in accordance with the method defined above.

According to another aspect of the invention there is provided a wind turbine comprising the wind turbine component designed or modified in accordance with the method defined above.

### BRIEF DESCRIPTION OF THE DRAWINGS

Examples of the invention will now be described with reference to the accompanying drawings, in which:
Figure 1 is a schematic illustration of a wind turbine;
Figure 2 shows the steps of a method for designing one or more components of the wind turbine of Figure 1;
Figure 3 shows example load and resistance distributions of a component of the wind turbine of Figure 1;
Figure 4 shows the steps of a method of determining a value of a parameter in a function for determining a design load according to which one or more components of the wind turbine of Figure 1 are to be designed;
Figure 5 shows characteristic extreme loads experienced by a component of the wind turbine of Figure 1 at different yaw offsets of the wind turbine;
Figure 6 shows probability distributions as a function of load for a component of the wind turbine of Figure 1 at different yaw offsets of the wind turbine; and
Figure 7 shows the plots of Figure 6 and additionally a combined load probability distribution of the wind turbine component across different yaw offsets.

### DETAILED DESCRIPTION

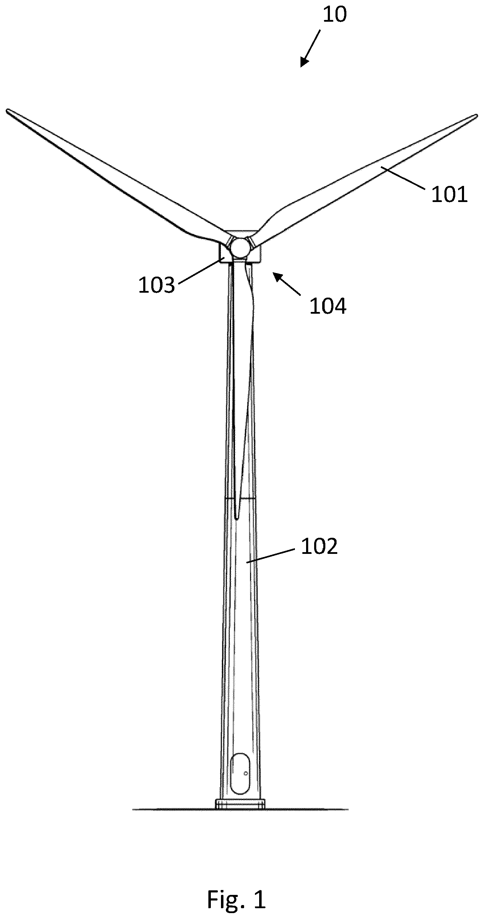

Figure 1 schematically illustrates a wind turbine 10. The invention relates to design of a component of the wind turbine 10, such as rotor blades 101, a tower 102, a nacelle 103 or a rotor 104 of the wind turbine 10. The design of a wind turbine component, such as the rotor blades 101, influences the efficiency of energy capture during wind turbine operation. However, the design of the wind turbine components also influences loading experienced by these and other components of the wind turbine 10 during operation or while at standstill. Wind turbine components may therefore be designed to maximise power production / energy capture of the wind turbine while ensuring component loading remains within allowable limits. In particular, wind turbine components are designed in accordance with relevant standards governing component design.

For a particular design of a wind turbine component, such as the rotor blades 101, it needs to be verified that limit states of the wind turbine component are not exceeded. The limit state is the state of a component and the loads acting upon it, beyond which structural failure occurs. Indeed, the purpose of design calculations - i.e. the design requirement for the limit state - is to keep the probability of a limit state being reached below a certain value prescribed for the wind turbine component.

Different types of loads experienced by the wind turbine during operation may be considered as part of the limit state verification process. For instance, gravitational and inertial loads result from gravity, vibration and rotation. Aerodynamic loads are static and dynamic loads that are caused by the airflow and its interaction with the stationary and moving parts of the wind turbine.

A number of design load cases may be considered during design of the rotor blade 10. In particular, the life of a wind turbine can be represented by a set of design situations covering conditions that the wind turbine may experience. The design load cases are used to verify the structural integrity of the wind turbine over the operating lifetime of the wind turbine.

Design load analysis can include analysis of extreme/ultimate and fatigue loads. The different types of loads mentioned above may be taken into account for the analysis of each design load case. For instance, the design load cases for extreme loading may include extreme load effects during operation of a wind turbine and extreme load effects when a wind turbine is in standstill.

In known approaches, design load analysis may be performed for wind turbine operation in which one or more operational parameters of the wind turbine are assumed to be a certain, defined value all of the time. The operational parameters can include control parameters. For instance, in known approaches design load analysis is performed under the assumption that the wind turbine has a zero yaw offset relative to the incoming wind direction. However, a yaw system may control the wind turbine 10 to have a non-zero yaw offset, e.g. as part of wind farm-level control ('wake steering') to optimise power production of a wind farm that includes a plurality of wind turbines (including the wind turbine 10). The loading experienced by the wind turbine 10 may be different for different yaw offsets when a given load case occurs, specifically an extreme loading event.

In other known approaches, a design load for a wind turbine component is determined based on the value of an operational parameter - that can take different values during wind turbine operation/lifetime - that corresponds to highest extreme loading experienced by the wind turbine.

The present invention is advantageous in that a design load for extreme loading of a wind turbine is determined in a manner that takes into account that an operational parameter, e.g. yaw offset, of the wind turbine may take different values when an extreme loading event (design load case) occurs. In particular, the invention is advantageous in that the probabilities of the different operational parameter values being realised is taken into account in the extreme loading determination to determine the design load. Specifically, the invention involves, for a given extreme loading event, combining characteristic extreme loads at each of a plurality of defined values of a given operational parameter, e.g. yaw offset, based on the probabilities of the wind turbine operating at the respective operational parameter values.

On one hand, this beneficially provides a design load for a wind turbine component that is greater than a design load based on a simple average of extreme loads experienced at the different defined values of the operational parameter, which is known to be unconservative, and therefore not sufficient to meet structural requirements for the wind turbine component. On the other hand, this beneficially provides a design load that is less than a design load based on the highest extreme loading observed across all of the different defined values of the operational parameter, which is known to be conservative, and therefore leads to wind turbine component design with sub-optimal material usage (i.e. overdesigned when operating at operational parameter values not corresponding to the highest extreme loading, e.g. extra steel in the wind turbine tower).

Indeed, the wind turbine component may be designed with a level of conservatism that is substantially the same as that used (in known approaches) to design a wind turbine component under the assumption that the operational parameter value remains constant through the wind turbine lifetime, e.g. zero yaw offset.

In this way, the invention advantageously provides for a wind turbine component that is designed such that structural requirements, e.g. from standards, are met, while optimising energy capture / power production capabilities of the wind turbine of which the component is part.

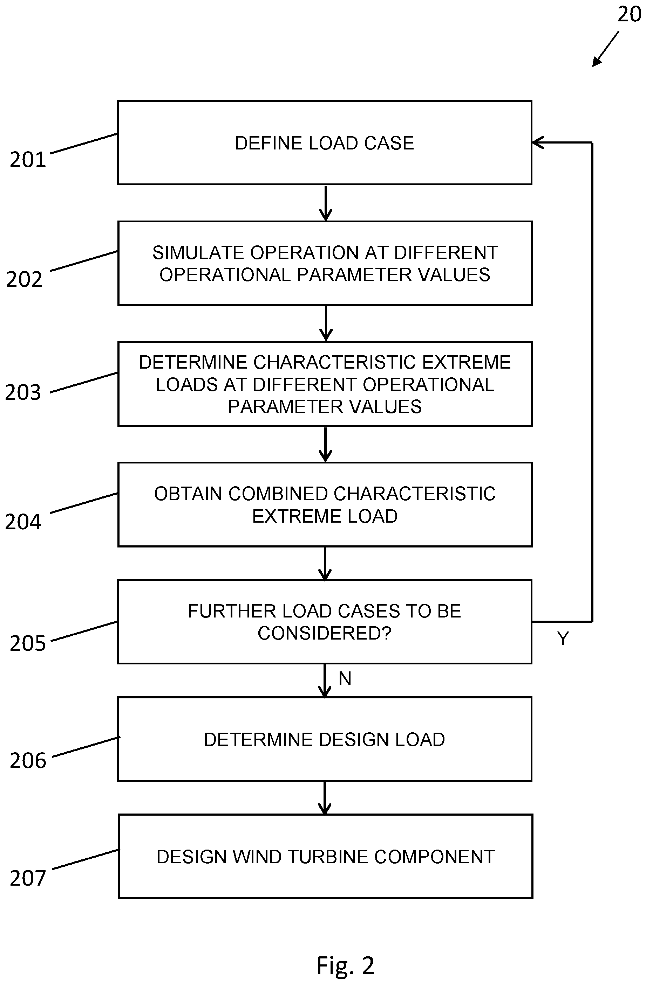

Figure 2 shows the steps of a method 20 of designing a component of the wind turbine 10 in accordance with examples of the invention. The wind turbine 10 can operate at/during a number of different values of an operational parameter of the wind turbine, and can experience different levels of extreme loading at the respective operational parameter values, when an extreme loading event (design load case) occurs.

In the described example, the different operational parameter values are different yaw offsets of the wind turbine (relative to wind direction). These yaw offsets are implemented by a yaw system of the wind turbine 10. A controller of the wind turbine 10 - or a wind farm of which the wind turbine 10 is part - controls the yaw system to implement certain yaw offsets to maximise power production across the wind farm. This may be referred to as wake steering.

In the described example, the wind turbine component is to be designed in accordance with a design requirement that an annual probability of structural failure is less than once every 2000 years. This value may be different in different examples.

At step 201, the method 20 involves defining/selecting a (first) design load case of a plurality of load cases to be considered. The design load cases correspond to extreme load events. For wake steering control, the design load cases include cases during wind turbine operation, but not when the wind turbine 10 is stopped. The design load cases may include relatively high wind speed scenarios.

The (first) design load case is to be considered for wind turbine operation at each of a plurality of different values of yaw offset. These values are defined, discrete values. In the described examples, yaw offset values of -20, -10, 0, 10, 20 degrees are considered. It will be understood, however, that any suitable number of values, over any suitable range may be selected. The difference between values need not be constant in different examples.

At step 202, the method 20 involves simulating operation of the wind turbine 10 at each of the defined operational parameter values when the defined design load case occurs. That is, in the described example wind turbine operation is simulated when the yaw offset is each of -20, -10, 0, 10, 20 degrees. The simulations may be performed using any suitable wind turbine simulation software.

The simulations in this example are implemented with the corresponding 98th quantile of the yearly maxima distribution for the extreme event. This corresponds to a 50-year load, as defined above. It will be understood that in different examples, different values can be used as appropriate. The yearly maxima distribution for extreme events may be obtained based on historical data from one or more wind farms, and/or for one or more specific geographical locations, for instance.

At step 203, the method 20 involves determining, based on output from the simulation in step 202, a characteristic extreme load experienced by the wind turbine 10 at each of the defined operational parameter values for the defined design load case. That is, in the described example, a characteristic extreme load is determined for wind turbine operation at yaw offsets at each of -20, -10, 0, 10, 20 degrees for the given design load case. In the described example, the characteristic extreme load at a given yaw offset is determined based on averaging, or otherwise combining, extreme loads observed in the simulation output when the simulation is implemented for different combinations of (random or deterministic) input parameters, e.g. wind conditions, measurement noise, rotor blade pitch, rotor speed, component material properties, etc.

At step 204, the method 20 involves obtaining a combined characteristic extreme load based on the plurality of characteristic extreme loads, determined in step 203, for the respective plurality of operational parameter values (yaw offsets) at the given design load case. In particular, this is performed using a combining function that combines the different characteristic extreme loads for the different yaw offsets based on a probability of the wind turbine 10 operating at each respective yaw offset when the given design load case (extreme loading event) occurs. The probability of wind turbine operation at each different offset may be set/defined based on historical data of wind turbine operation at one or more wind farms, for instance. Alternatively, or in addition, the probabilities may be obtained based on expected operation at different offsets, e.g. using planned control policies.

In a purely illustrative example, the probability of wind turbine operation may be equal for each of the different yaw offsets, in which case the probability would be 0.2 (20%) at each of the five yaw offset values - -20, -10, 0, 10, 20 degrees - in the described example. It will be understood, however, that any suitable combination of probabilities across different operational parameter values may be defined.

In the described example, the combining function is a weighted average function of the following form: ${Q}_{av} = {\left({\sum }_{i}^{N} \left({Q}_{i}^{α}⋅{P}_{i}\right)\right)}^{\frac{1}{α}}$

Here, *Qₐᵥ* is the combined characteristic extreme load (for the design load case under consideration), *Qᵢ* is the determined characteristic extreme load at the i-th defined operational parameter value of the wind turbine, *Pᵢ* is the defined probability of wind turbine operation at the i-th defined operational parameter value, N is a total number of different states of the system (*N =* 5 in the described example), and *α >* 1 is a defined exponent value.

By inspection, it is seen in the above function that higher characteristic extreme loads, for a given yaw offset, will have a relatively higher contribution to the combined characteristic extreme load (for *α >* 1). *α* is a tuneable exponent that determines a level of conservatism in the combined characteristic extreme load, where higher values of *α* correspond to higher levels of conservatism. Indeed, as *α* increases, then the combined characteristic extreme load will tend towards the highest characteristic extreme load from the different yaw offsets, which is known to be overly conservative. An approach for determining a value of *α* to achieve a certain component failure rate, e.g. once every 2000 years, will be described in detail further below.

Referring again to Figure 2, at step 205 of the method 20 it is determined whether all of the plurality of defined design load cases (extreme loading events) have been considered/analysed. If not, then the method 20 loops back to step 201 and a next one of the plurality of defined design load cases is selected. Steps 202, 203 and 204 are then repeated for this newly selected design load case. Indeed, these steps are repeated for each design load case until a combined characteristic extreme load is determined for each of the plurality of defined design load cases to be considered.

Once the combined characteristic extreme load has been determined for each design load case, at step 206 the method 20 involves determining a design load for extreme loading of the wind turbine 10 based on the plurality of combined characteristic extreme loads for the respective defined load cases. In the described example, the design load is selected to be based on - for instance, selected to be equal to - the combined characteristic extreme load having the highest value.

In some examples, the highest combined characteristic extreme load is compared against a default characteristic extreme load. This default load may correspond to a case in which it is assumed that the operational parameter under consideration remains constant/unchanged during wind turbine operation/lifetime. In the described example in which different yaw offsets are considered, then the default characteristic extreme load may correspond to the characteristic load obtained when the yaw offset is assumed to be zero throughout operation. This can alternatively be regarded as being the characteristic load obtained when wind farm control or wake steering is either deactivated or not present. In such an example, the design load for extreme loading of the wind turbine 10 may be determined based on the higher of: the default characteristic extreme load; and the highest combined characteristic extreme load.

At step 206, the method 20 involves designing the wind turbine component - e.g. rotor blade 101, tower 102 - in accordance with the design load determined in step 205. In some examples, the method 20 may then further involve manufacturing the wind turbine component designed in accordance with the determined design load. Alternatively, in some examples the method 20 may comprise modifying an existing wind turbine component in accordance with the determined design load, e.g. adding extra steel to a wind turbine tower.

A limit state model/equation may be used to obtain the design requirement that results in a defined, desired failure rate, e.g. once every 2000 years. That is, the limit state model may be used to determine the tuneable exponent value *α* that provides the desired failure rate. In one example, the limit state model may be defined in the following form: $g = zδR - {QX}_{dyn} {X}_{exp} {X}_{aero} {X}_{str}$ where *g* is the failure rate (also referred to as probability of failure or reliability level), z is a design variable, R is a resistance uncertainty model (i.e. a probability distribution of component strength), *δ* is an uncertainty associated with the resistance uncertainty model, Q is an event load distribution (i.e. a probability distribution of the loading a certain component will endure), *X_{dyn}* is a structural response uncertainty model, *Xₑₓₚ* is a siting and exposure uncertainty model, *Xₐₑᵣₒ* is an aerodynamic uncertainty model, and *Xₛₜᵣ* is a load-to-strain uncertainty model. *X_{dyn}, Xₑₓₚ, Xₐₑᵣₒ, Xₛₜᵣ* may be obtained from the art known to the skilled person. The various models may use different types of distribution, as appropriate, e.g. lognormal, Gumbel. It will be understood that different limit state model setups may be used in different examples. The various models may also have different coefficients of variance, as appropriate.

The limit state model/equation allows for the comparison of the load distribution and resistance distribution. It is desired that the resistance of a component is greater than the load it needs to be endure. While this cannot be guaranteed all of the time, it is expected to be the case up to the desired reliability level, e.g. failure rate of once every 2000 years.

The limit state model can be combined with a design equation to determine the value of the design variable z. In particular, the following form of the design equation can be solved to calculate z: $\frac{{zR}_{k}}{{γ}_{m}} - {γ}_{f} {Q}_{k} = 0$ where *Rₖ* is a characteristic resistance, *Qₖ* is a characteristic load, *γₘ* is a material safety factor, and *γ_{f}* is a load safety factor. The characteristic resistance in the described example is the 5% quantile resistance. The characteristic load in the described example is the 50-year load (98^{th} quantile load of the yearly maxima distribution for 10-minute average wind speeds) as described above. The characteristic load for a given load case is determined via simulation as described above.

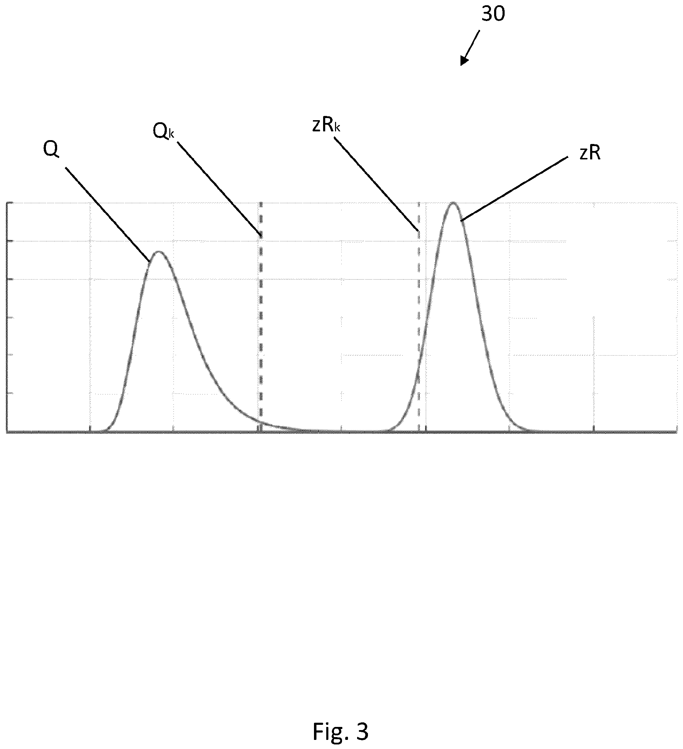

Figure 3 shows a plot 30 of the load and resistance distributions *Q, zR* in one illustrative example when design according to the above design equation using specific load and resistance distribution models, and specific values of *γₘ* and *γ_{f}*, are implemented. Specifically, a Gumbel distribution with 20% coefficient of variance is used for the load, and a lognormal distribution with a 5% coefficient of variance is used for the resistance, and *γ_{f}* > *γₘ*. When using these distributions in the above limit state equation, then a final yearly failure probability rate can be calculated. This approach will be used to determine the exponent value *α* to provide a desired failure rate in the below description.

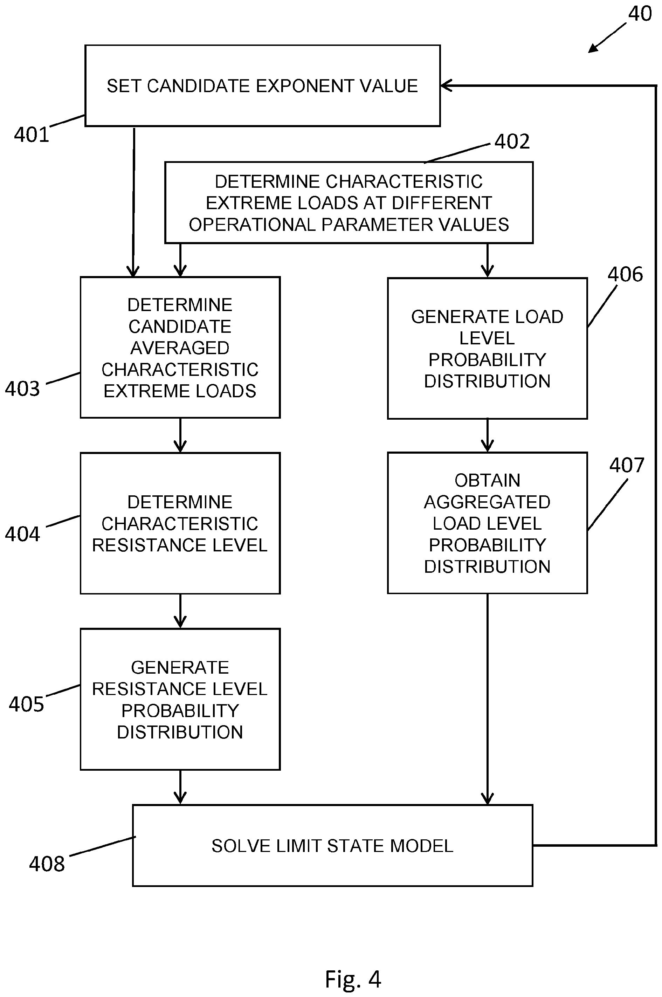

Figure 4 shows the steps of a method 40 for determining the exponent value *α* in the above-outlined weighted average function. In particular, the method 40 describes determining an exponent value that provides a combined characteristic extreme load *Qₐᵥ* corresponding to a desired level of conservatism to be used in the design of the wind turbine component. Expressed differently, this method provides for a wind turbine component designed to have a failure rate of a desired value, e.g. once every 2000 years.

The method 40 provides an iterative approach for determining the exponent value *α*. A first step 401 of the method 40 therefore involves setting the exponent value *α* to be a candidate exponent value, which may be any suitable initial value. The reliability level corresponding to this candidate exponent value will be determined using a limit state model as described above. In order to solve the limit state model, the load and resistance distributions need to be obtained, as described in the steps below.

At step 402, the method 40 involves determining a characteristic extreme load experienced by the wind turbine 10 at a plurality of defined operational parameter values, e.g. yaw offsets. In particular, these determinations are based on an output of simulated operation of the wind turbine 10 at each of the respective defined operational parameter value. That is, this step 402 may be performed in a corresponding manner to step 203 of Figure 2.

To determine the resistance distribution, the method 40 initially involves, at step 403, determining a candidate averaged/combined characteristic extreme load by applying the weighted average function defined above with the exponent value *α* equal to the candidate exponent value. In particular, the characteristic extreme loads obtained in step 402 are used along with the defined probability of operation at each of the respective operational parameter values, e.g. yaw offsets.

Then, at step 404 the method 40 involves determining, using a defined design equation/model (such as the design equation outlined above), a characteristic resistance level of the wind turbine component under consideration based on the determined candidate averaged characteristic extreme load obtained in step 403. Suitable values of the material and load safety factors may be used.

Finally, the method 40 involves, at step 405, generating the resistance level probability distribution for the wind turbine component under consideration based on the determined characteristic resistance level. In one example, the characteristic resistance level is the 5% quantile, the resistance distribution is a lognormal distribution, and the coefficient of variance is 5%. Indeed, this is in line with the example shown in Figure 3.

To determine the load distribution, the method 40 initially involves, at step 406, generating a load level probability distribution for the wind turbine component under consideration at each defined operational parameter value, e.g. each yaw offset value, based on the determined characteristic extreme load at each respective operational parameter value obtained in step 402.

To generate the load distribution for a given yaw offset, it is assumed that the respective yaw offset is present all of the time during wind turbine operation. This may be implemented using one or more of the following assumptions: the coefficient of variance of the load distribution remains the same for each yaw offset; the distribution type remains the same for each yaw offset; and the 50-year load event is independent of the yaw offset being applied. The load arising from the 50-year load event is set to be the 98% quantile of the load distribution.

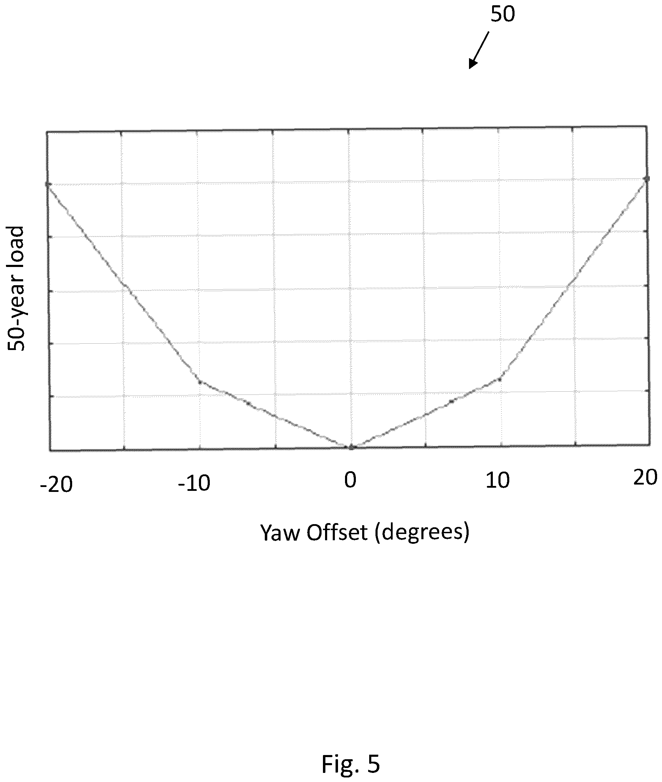

In the described example, the 98% quantile loads for the different operational parameter values - in this case, yaw offsets equal to -20, -10, 0, 10, 20 - are of the form shown schematically in Figure 5, i.e. substantially parabolic. In particular, the plot 50 shows that the 98% quantile load is lowest at 0 degrees yaw offset, and highest at -20, 20 degrees yaw offset. Note that in different examples the 98% quantile loads for the different operational parameter values may take any suitable form.

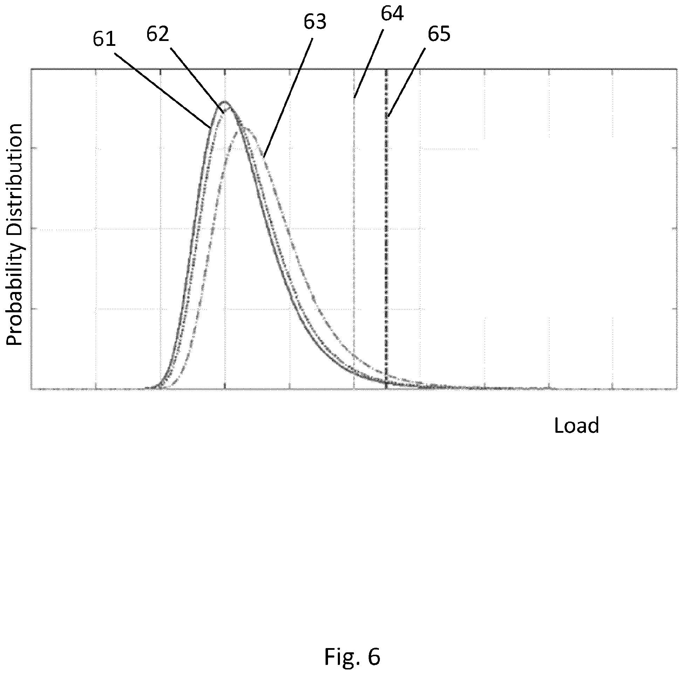

Figure 6 shows probability distribution functions (PDFs) against load for the different yaw offsets and corresponding 50-year load values from Figure 5. In particular, a first plot 61 shows the PDF for 0 degrees yaw offset, a second plot 62 shows the PDF for -10, 10 degrees yaw offset, and a third plot 63 shows the PDF for -20, 20 degrees yaw offset. Also, Figure 6 shows the lowest 50-year event load 64 across the different yaw offsets - corresponding to 0 year yaw offset - and the highest 50-year event load 65 across the different yaw offsets.

As mentioned above, these load distributions are obtained under an assumption that each respective yaw offset occurs 100% of the time during wind turbine operation. However, a wind turbine will not always be running with yaw offsets being applied and, even when yaw offsets are applied, then a wind turbine will not always run at the yaw offset corresponding to the highest characteristic load.

The method therefore takes a probability of each yaw offset being applied into account. These may be defined to be any suitable probabilities, e.g. an equal probability at each defined yaw offset.

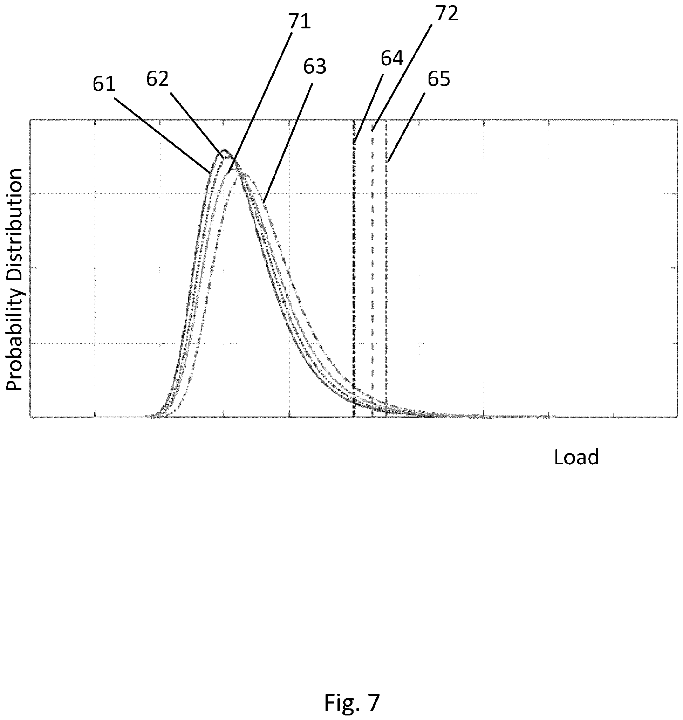

Referring back to Figure 4, in order to determine the load distribution to be used to solve the limit state model, at step 407 the method 40 involves aggregating the plurality of generated load level probability distributions determined in step 406 - such as those shown in Figure 6 - to obtain an aggregated load level probability distribution. Provided that the assumption holds that the occurrence of the loading event is independent of the yaw offset being applied, then the load distributions from each yaw offset can be aggregated into the single overall load distribution *F_{Q,Agg}* using: ${F}_{Q , Agg} = {\sum }_{i}^{N} \left({F}_{Q , i}⋅{P}_{i}\right)$ **where** *F_{Q,i}* is the cumulative distribution function of the individual yaw offset, *Pᵢ* is the probability of occurrence of the respective yaw offset, and *N* is the number of defined yaw offsets under consideration. The result of this aggregation is illustrated in Figure 7, which shows the plots of Figure 6, with the addition of the aggregated load level probability distribution 71 and the 98% quantile load 72 from this aggregated distribution 71.

Referring again to Figure 4, at step 408 the method 40 involves solving the limit state equation/model using the resistance level probability distribution obtained in step 405 and the aggregated load level probability distribution obtained in step 408 to obtain a failure rate of the wind turbine component. This obtained failure rate is then compared against a desired failure rate, e.g. once every 2000 years. If the obtained failure rate is different from the desired failure rate, then the method 40 involves updating the candidate exponent value, repeating steps 403-405 with the updated candidate exponent value to determine an updated resistance level distribution, and then solving the limit state model in step 408 to obtain an updated failure rate. This is repeated in an iterative manner until the obtained failure rate is equal to the desired failure rate (or sufficiently close thereto), to thereby obtain the determined exponent value.

Many modifications may be made to the described examples without departing from the scope of the appended claims.

In the examples described above, simulation of wind turbine operation at different operational parameter values in the form of different yaw offsets is considered. It will be understood, however, that various different operational parameters of the wind turbine - that can assume a number of different values/positions/states for a given design load case - can be considered when simulating wind turbine operation for a given design load case. These operational parameters may be control parameters, such as yaw offset (as described above), rotor blade pitch angle, etc. These operational parameters may be environmental parameters, such as wind speed, wind direction, etc.

A further specific example of an operational parameter in this context is an orientation of a rail system of a wind turbine relative to incoming wind direction. In particular, the wind turbine may include a tower top mass damper that sits in such a rail system to control movement and counteract vibrations and dynamic loads. For different incoming wind directions, the orientation of the rail system relative to the wind direction changes. For a given design load case, the wind turbine (including the rail system) may experience different loading levels for different values of the rail system orientation relative to wind direction.

## Claims

1. A method of designing a wind turbine component, the method comprising:
for each of a plurality of defined load cases of the wind turbine:
for each of a plurality of defined values of an operational parameter of the wind turbine:
simulating operation of the wind turbine at the respective defined operational parameter value for the respective defined load case;
determining, based on output from the simulation, a characteristic extreme load, for the respective defined load case, experienced by the wind turbine at the respective defined operational parameter value;
obtaining a combined characteristic extreme load for the respective defined load case using a combining function that depends on the determined characteristic extreme load, and a defined probability of wind turbine operation, at each respective defined operational parameter value;
determining a design load for extreme loading of the wind turbine based on the plurality of combined characteristic extreme loads for the respective defined load cases; and
designing the wind turbine component in accordance with the determined design load.

2. A method according to Claim 1, wherein determining the design load comprises setting the design load based on a highest combined characteristic extreme load of the plurality of combined characteristic extreme loads; optionally, wherein the design load is set to be equal to the highest combined characteristic extreme load.

3. A method according to any previous claim, wherein the characteristic extreme load is a load obtained when the simulation is executed at a defined quantile of a yearly maxima distribution for average wind speeds, defined in the simulation, in the vicinity of the wind turbine; optionally, wherein the defined quantile value is the 98^{th} quantile.

4. A method according to any previous claim, wherein the combining function is a weighted average function.

5. A method according to Claim 4, wherein the defined probabilities are applied as weights to the respective determined characteristic extreme loads in the combining function.

6. A method according to Claim 4 or Claim 5, wherein the weighted average function to determine the combined characteristic extreme load *Qₐᵥ* for the respective defined load case is expressed as: ${Q}_{av} = {\left({\sum }_{i}^{N} \left({Q}_{i}^{α}⋅{P}_{i}\right)\right)}^{\frac{1}{α}}$ where N is a total number of the defined operational parameter values of the wind turbine, *Qᵢ* is the determined characteristic extreme load at the i-th defined operational parameter value of the wind turbine, *Pᵢ* is the defined probability of wind turbine operation at the i-th defined operational parameter value among the *N* operational parameter values, and *α >* 1 is an exponent value.

7. A method according to Claim 6, the method comprising determining the exponent value, which comprises:
setting the exponent value to be a candidate exponent value;
(a) for each of the plurality of defined values of the operational parameter of the wind turbine, determining, based on an output of simulated operation of the wind turbine at the respective defined operational parameter value, a characteristic extreme load experienced by the wind turbine at the respective defined operational parameter value;
(b1) determining a candidate averaged characteristic extreme load by applying the weighted average function with the exponent value equal to the candidate exponent value;
(b2) determining, using a defined design model, a characteristic resistance level of the wind turbine component based on the determined candidate averaged characteristic extreme load;
(b3) generating a resistance level probability distribution for the wind turbine component based on the determined characteristic level;
(c1) generating a load level probability distribution for the wind turbine component at each respective defined operational parameter value based on the determined characteristic extreme load at each respective defined operational parameter value;
(c2) aggregating the plurality of generated load level probability distributions to obtain an aggregated load level probability distribution;
(d) solving a defined limit state model using the resistance level probability distribution and the aggregated load level probability distribution to obtain a failure rate of the wind turbine component;
(e) if the obtained failure rate is different from a desired failure rate, then repeating steps of:
updating the candidate exponent value; and
executing steps (b1)-(b3) and (d) with the updated candidate exponent value, until the obtained failure rate is equal to the desired failure rate, to thereby obtain the determined exponent value.

8. A method according to Claim 7, wherein the desired failure rate is substantially equal to a default failure rate of a default design load for extreme loading of the wind turbine associated with operation at a default value of the defined operational parameter; optionally, wherein the default value of the defined operational parameter occurs when a system that controls changes to the operational parameter value is inactive.

9. A method according to Claim 7 or Claim 8, wherein the generated resistance level probability distribution is of a defined resistance type, wherein the generated load level probability distribution is of a defined distribution type, and the method comprises repeating steps (a)-(e) for a plurality of different resistance types and/or a plurality of different distribution types to obtain respective determined exponent values, wherein a highest one of the determined exponent values is selected to be used in the weighted average function.

10. A method according to any of Claims 7 to 9, wherein in the weighted average function, for each of the plurality of defined operational parameter values, a defined probability of wind turbine operation at the respective defined operational parameter value is applied to the respective characteristic extreme loads, wherein the generated load level probability distribution is of a defined distribution shape, and the method comprises repeating steps (a)-(e) for a plurality of different probabilities for each defined operational parameter value and/or a plurality of different distribution shapes to obtain respective determined exponent values, wherein a highest one of the determined exponent values is selected to be used in the weighted average function.

11. A method according to any of Claims 7 to 10, wherein the load level probability distributions are generated in step (c1) to have a same coefficient of variation.

12. A method according to any previous claim, wherein the plurality of defined values of the operational parameter is a plurality of defined values of a yaw offset of a nacelle of the wind turbine relative to incoming wind direction.

13. A method according to any of Claims 1 to 11, wherein the plurality of defined values of the operational parameter is a plurality of incoming wind directions relative to an orientation of a rail system, of the wind turbine, in which a tower mass damper of the wind turbine is located.

14. A method according to any previous claim, the method comprising manufacturing or modifying the wind turbine component designed in accordance with the determined design load.

15. A wind turbine component designed or modified in accordance with the method of any previous claim.
